# EUROPEAN PATENT APPLICATION

(11) **EP 4 516 106 A2**
(43) Date of publication of application: **05.03.2025**
(21) Application number: 25151968.2
(22) Date of filing: 06.12.2019
(51) Int. Cl.: A01P 21/00

(54) **A PLANT GROWTH PROMOTER COMPOSITION, PROCESSES FOR PREPARING THE SAME AND USES THEREOF**

(30) Priority: 21.12.2018 IT 201800020869
(62) Divisional of application: 19829407.6
(71) Applicant: UPM-Kymmene Corporation, 00100 Helsinki (FI); Green Innovation GmbH, 6020 Innsbruck (AT)
(72) Inventor: Hübsch, Christian, Helsinki (FI); Pietarinen, Suvi, Helsinki (FI); Leonardi, Giuliano, Innsbruck (AT)
(74) Representative: Villa, Livia

(57) **Abstract**

A composition is disclosed comprising a fungus of *Trichoderma* genus and a lignin fraction, as well as processes for preparing the same and uses as a plant growth and fruit production promoter in agriculture. In an additional aspect, an agro-chemical product is also disclosed comprising said composition and agro-chemical additives.

## Description

### FIELD OF THE INVENTION

The present invention concerns a composition comprising a fungus of *Trichoderma* genus and a lignin fraction, as well as processes for preparing the same and uses as a plant growth and fruit production promoter in agriculture.

### STATE OF THE ART

Fertilizer, which essentially consisting of various types of nutritive components for plant growth, has been widely employed throughout the world to improve the yields of agriculture products. Generally, fertilizers may be in the forms of pure liquid, suspensions or solid. They can be introduced to plants through soil feeding or by applying to the foliage of the plants such as spraying, irrigation, and the likes. In these recent years, foliar fertilizer has gradually replaced the common usage of soil-applied fertilizer in agricultural sites as they have fewer negative impacts to the environmental. Studies showed that conventional fertilization method through soil feeding has contributed to water surface and groundwater contamination. This is mainly due to the leaching of the soluble nutrients of the fertilizer, such as nitrogen, into the aquifer. Such circumstances may result to poor transportation of nutrients to the plant cells. Therefore, it was found to be more desirable to supply nutrients directly to a plant through the foliage of plants. Foliar fertilizers seem to overcome the disadvantages of soil feeding method, however, improper application of such foliar fertilizers to plants, for example, when a high concentration of nutrients is being directly applied on the foliage, can lead to foliage damage in the form of necrotic areas or burning of the leaves, and hence causes reduction in crop yields. It is assumed that foliar fertilizer with reduced amount of nutrients can prevent the foliage damage. However, it is impractical as a labor - intensive operation is required to fertilize the plants with the low nutrients content foliar fertilizer. As an example, US patent 6,475,258 disclosed a foliar fertilizer composition for enhancing the growth of plants through foliar application. Said composition is an aqueous solution consisting of at least one coenzyme, wherein said coenzyme is preferably a vitamin B, and more preferably folic acid and/or pyridoxine, and at least one of a carbohydrate source, a complexing agent and a preservative. Although the subject fertilizer can substantially improve the nutrients uptake by plants, through enhancing their metabolism activities, however, the availability of nutrients either from soils or from foliar fertilizers to be incorporated into the plants cell has yet to be addressed.

It is therefore felt the need to effectively promote the plant growth, by providing a sufficient quantity of nutrients to a plant without causing any damage on foliage, and especially preserving the human and animal health, the crop and environment.

### SUMMARY OF THE INVENTION

The above object has been achieved by a composition comprising a fungus of *Trichoderma* genus and a lignin fraction, as claimed in claim 1.

In another aspect, the present invention relates to a use of said composition as a plant growth and fruit production promoter in agriculture.

In an additional aspect, the present invention concerns an agro-chemical product comprising the composition and agro-chemical additives.

In a further aspect, the present invention concerns a method for promoting plant growth and fruit production, said method comprising the step of applying the composition or the agro-chemical product to a plant or plant soil.

The term "plant" denotes a plant or plants that can be grown and harvested for profit or subsistence, thus including crops, cereals, vegetables, fruits, and flowers, as well as grown and harvested for gardening or personal use.

The term "plant soil" denotes the soil where the plant is growing or where the plant is sowed or where the plant will be sowed, thus including grounds, lands, and soilless media, such as in hydroculture and hydroponics.

### BRIEF DESCRIPTION OF THE FIGURES

The characteristics and the advantages of the present invention will become clear from the following detailed description, the working examples provided for illustrative purposes, and the accompanying figures, wherein:

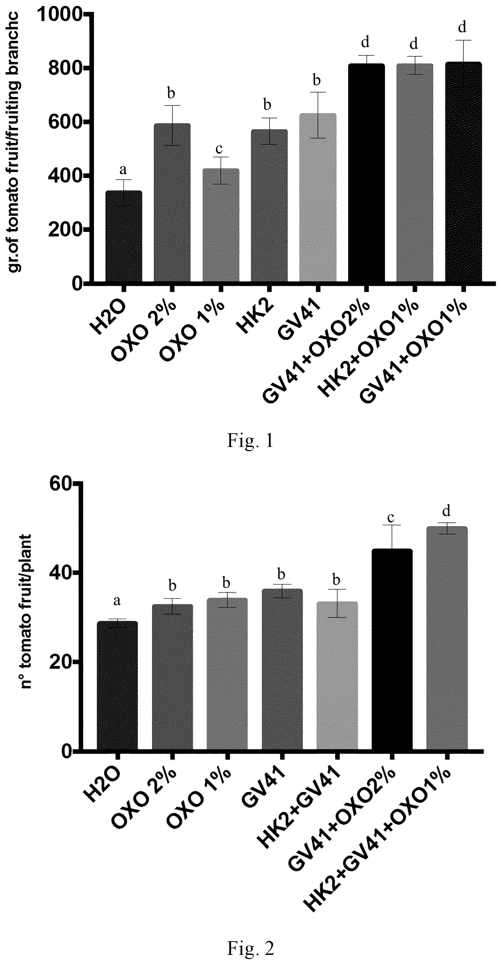

- Figure 1 shows the effect of the composition of the invention on tomato yield. Bars indicate the mean of yield per plant in terms of grams of tomato fruits produced per fruiting branch. Different letters on the bars indicate significant differences according to ANOVA and LSD test (p <_0,05), as per Example 3;
- Figure 2 shows the effect of the composition of the invention on tomato yield. Bars indicate the mean of yield per plant in terms of number of tomato fruits produced per plant. Different letters on the bars indicate significant differences according to ANOVA and LSD test (p <_0,05), as per Example 3;

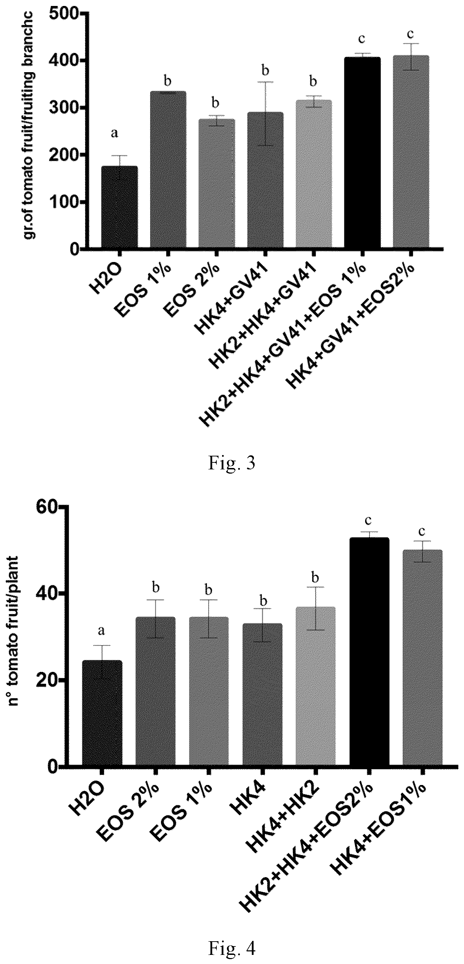

- Figure 3 shows the effect of the composition of the invention on tomato yield. Bars indicate the mean of yield per plant in terms of grams of tomato fruits produced per plant. Different letters on the bars indicate significant differences according to ANOVA and LSD test (p <_0,05), as per Example 3; and
- Figure 4 shows the effect of the composition of the invention on tomato yield. Bars indicate the mean of yield per plant in terms of number of tomato fruits produced per plant. Different letters on the bars indicate significant differences according to ANOVA and LSD test (p <_0,05), as per Example 3.

### DETAILED DESCRIPTION OF THE INVENTION

The subject of the invention therefore is a composition comprising a fungus of *Trichoderma* genus and a lignin fraction, wherein:
- said fungus is selected from *Trichoderma* species, their protoplast fusants, and mixtures thereof,
- said lignin fraction comprises fragments having a weight average molecular weight up to 20,000 Daltons, as measured by Size-Exclusion Chromatography, said fragments comprising up to 111 phenylpropane units on weight average, and wherein the fungus is in a concentration up to 1×10⁷ spores/ml of composition, and the lignin fraction in a concentration up to 5wt%, based on the weight of the composition.

Preferably, the composition is in the form of an aqueous solution, dispersion or suspension.
Preferably, said *Trichoderma* species is selected from *Trichoderma aggressivum,*
*Trichoderma asperellum, Trichoderma atroviride, Trichoderma citrinoviride,*
*Trichoderma cremeum, Trichoderma harzianum, Trichoderma koningii, Trichoderma longibrachiatum, Trichoderma reesei, Trichoderma virens, Trichoderma viride,* and
*Trichoderma viridescens.*

A fungus belonging to *Trichoderma* genus as defined above are able to colonize a variety of niches, antagonize and control plant pathogenic microorganisms and establish a direct beneficial interaction with plants resulting in the enhancement of growth, nutrient uptake and systemic resistance to diseases. In particular, improvement in plant development is generally associated with increased seed germination, root system, plant weight and leaf area, size and/or number of seeds flowers and/or fruits with a consequent increase in yields and often in the content of important nutritional factors. Lignin is known to have an antimicrobial activity against both fungi and bacteria. Therefore, it was expected that treatment of Trichoderma, a well know soil-borne fungus, would result in a direct inhibition at concentrations of lignin found toxic for most of the other fungi already tested. Accordingly, the rational expectation was that Trichoderma would have been affected at lignin concentrations typically considered for use in agriculture application. Surprisingly and unexpectedly, as shown in the Examples below, Trichoderma species listed above were not only unaffected by the lignin fraction at the given concentrations, but even increased their activity in terms of plant productivity as well as in terms of plant growth.

Particularly, it was observed that the effect on plant growth promotion involves an increase in some case up to 25% as compare to single component application.

In addition to what above, it should be appreciated that Trichoderma species and lignin fraction work in different manners and use different mechanisms: this makes the resulting composition effect to be more robust and suitable in a variety of conditions, while reducing the insurgence of resistance mechanisms (for biocontrol).

Moreover, the production of the composition is simple and cost-effective, since the respective concentrations are advantageously very low. This also means that the composition can be prepared in a concentrated form, that could be easily diluted with water to the concentrations above, before use.

With the term "protoplast fusants" is meant to include hybrid strains of Trichoderma spp. obtained via protoplast fusion.

Protoplasts are the cells of which cell walls are removed and cytoplasmic membrane is the outermost layer in such cells. Protoplast can be obtained by specific lytic enzymes to remove cell wall. Protoplast fusion is a physical phenomenon, during fusion two or more protoplasts come in contact and adhere with one another either spontaneously or in presence of fusion inducing agents. By protoplast fusion, it is possible to transfer some useful genes from one species to another. Protoplast fusion an important tool in strain improvement for bringing genetic recombinations and developing hybrid strains in filamentous fungi. Said improvement can involve for example higher yields in cellulase production.

Protoplast fusants for the purposes of the present invention can be obtained according to techniques known in the art (e.g. Hassan MM (2014) Influence of protoplast fusion between two Trichoderma spp. on extracellular enzymes production and antagonistic activity, Biotechnology & Biotechnological Equipment, 28:6, 1014-1023)

In preferred embodiments of the composition of the invention, the fungus of *Trichoderma* genus is selected from *T. Harzianum, T. Atroviride* and *T. virens,* and mixtures thereof.

In some embodiments, the composition comprises a mixture of Trichoderma species.

In more preferred embodiments, said fungus is selected from *T. Harzianum* HK2, *T. Atroviride* HK4 and *T. virens* GV41, and mixtures thereof, wherein "HK2", "HK4" and "GV41" are the respective preferred strains.

In some embodiments, the composition comprises a mixture of Trichoderma strains. When a mixture is present in the composition, each species or strain is at the same or about the same concentration.

In preferred embodiments, the composition comprises two Trichoderma species or two Trichoderma strains in a concentration ratio of 2:1 to 1:2, preferably 1:1.

Preferably, the fungus is in a concentration of 1×10⁶ to 8×10⁶ spores/ml of composition. More preferably, the fungus is in a concentration of 2×10⁶ to 6×10⁶ spores/ml of composition. In preferred embodiments, the fungus is in a concentration of 3×10⁶ to 5×10⁶ spores/ml of composition.

Lignin is a class of complex organic polymers that form important structural materials in the support tissues of some algae, vascular plants, included their bark, and herbaceous plants, such as wood (i.e. softwood and hardwood), straw of all cereals, cane bagasse, grass, linen, jute, hemp, or cotton. Lignin can also have mineral source, such as peat, leonardite and coal.

Chemically, in its native form, lignin is a very irregular, randomly cross-linked polymer of phenylpropane units joined by many different linkages, with a weight average molecular weight of 20,000 Daltons or higher. A representative and illustrative lignin fragment (I) containing the most important bonding patterns is shown herein below: 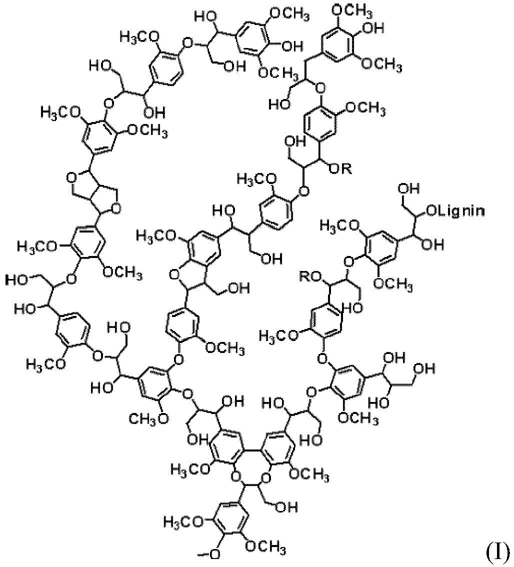 Said polymer is the result of an enzyme-mediated dehydrogenative polymerization of three phenylpropanoid monomer precursors: 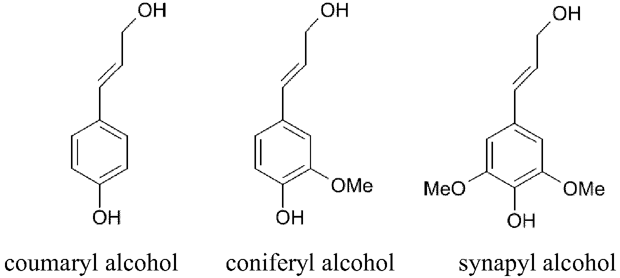 which result in the following moieties, respectively:

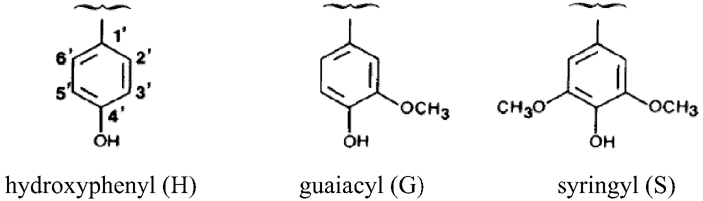

Coniferyl alcohol occurs in all species and is the dominant monomer in conifers (softwoods). Deciduous (hardwood) species contain up to 40% synapyl alcohol units while grasses and agricultural crops may also contain coumaryl alcohol units.

Lignin can be categorized to softwood and hardwood lignins according to their raw biomass sources.

Raw biomass sources that can be suitable starting materials for obtaining the relevant lignin fraction are any lignin including essentially pure lignin as well as kraft lignin, biomass originating lignin, lignin from alkaline pulping process, lignin from soda process, lignin from organosolv pulping, lignin from enzymatic processes, lignin from steam explosion processes, and any combination thereof.

By the expression "essentially pure lignin", it should be understood as at least 80% pure lignin on a dry raw biomass basis, preferably at least 90% pure lignin, more preferably at least 95% pure lignin, the remainder being extractives and carbohydrates such as hemicelluloses as well as inorganic matter.

By the expression "kraft lignin", it is to be understood lignin that originates from kraft black liquor. Black liquor is an alkaline aqueous solution of lignin residues, hemicellulose, and inorganic chemicals used in a kraft pulping process. The black liquor from the pulping process comprises components originating from different softwood and hardwood species in various proportions. Lignin can be separated from the black liquor by different techniques including e.g. precipitation and filtration. Lignin usually begins precipitating at pH values below 11 - 12. Different pH values can be used in order to precipitate lignin fractions with different properties. These lignin fractions may differ from each other by molecular weight distribution, e.g. M_{w} and Mₙ, polydispersity, hemicellulose and extractive contents, contents of inorganic material. The precipitated lignin can be purified from inorganic impurities, hemicellulose and wood extractives using acidic washing steps. Further purification can be achieved by filtration. Alternatively, the lignin is separated from pure biomass. The separation process can begin with liquidizing the biomass with strong alkali followed by a neutralization process. After the alkali treatment, the lignin can be precipitated in a similar manner as presented above.

Preferably, the separation of lignin from biomass comprises a step of enzyme treatment. The enzyme treatment modifies the lignin to be extracted from biomass. Lignin separated from pure biomass is essentially sulphur-free (sulphur content less than 3%) and thus valuable in further processing. Preferably, wood material is pre-treated to remove hemicelluloses and thereafter cellulose has been hydrolysed. The resulting insoluble lignin fraction comprises up to 30wt% of cellulose.

Preferably, the separated lignin is also subjected to a depolymerization process in order to further reduce the weight average molecular weight of fragments.

In some embodiments, the separated lignin is also subjected to a depolymerization process in order to further reduce the weight and number average molecular weights of fragments.

Suitable depolymerization processes include base-catalyzed depolymerization, acid-catalyzed depolymerization, metallic catalyzed depolymerization, ionic liquids-assisted depolymerization, and supercritical fluids-assisted lignin depolymerization.

In preferred embodiments, said lignin fraction is obtained by base-catalyzed depolymerization.

Preferably, said lignin fraction is obtained by subjecting the separated lignin to a base-catalyzed depolymerization at a temperature lower than 300°C and a pressure lower than 30 MPa.

The pH is set between 11 and 14, by adding a base such as NaOH, KOH, Ca(OH)₂, LiOH, K₂CO₃, or a mixture thereof.

The weight average molecular weight (M_{w}) of fragments in the lignin fraction is measured by Size-Exclusion Chromatography (or 'SEC'). SEC employs a stagnant liquid present in the pores of beads as the stationary phase, and a flowing liquid as the mobile phase. The mobile phase can therefore flow between the beads and also in and out of the pores in the beads. The separation mechanism is based on the size of the polymer molecules in solution. Bigger molecules will elute first. Small molecules that can enter many pores in the beads take a long time to pass through the column and therefore exit the column slowly. To determine the molecular weights of the components of a polymer sample, a calibration with standard polymers of known weight must be performed. Values from the unknown sample are then compared with the calibration graph. The retention times depend on the used column material, eluent and how similar the used standards are compared to the samples. Preferably, the eluent is preferably 0.1 M NaOH.

Preferably, said lignin fraction comprises fragments having a weight average molecular weight of 2,000-20,000 Daltons.

More preferably, said lignin fraction comprises fragments having a weight average molecular weight of 3,000-20,000 Daltons.

Even more preferably, said lignin fraction comprises fragments having a weight average molecular weight of 4,000-15,000 Daltons.

In some preferred embodiments, said lignin fraction comprises fragments having a weight average molecular weight of 4,000-6,000 Daltons.

In other preferred embodiments, said lignin fraction comprises fragments having a weight average molecular weight of 9,000-11,000 Daltons.

Preferably in these embodiments, said fragments comprise 11-111 phenylpropane units on weight average, more preferably, 22-111 phenylpropane units on weight average.

The molecular weight of the three phenylpropanoid monomer precursors varies between 150 Da of coumaryl alcohol, 180 Da of coniferyl alcohol, and 210 Da of synapyl alcohol. The average weight is therefore 180 Da and this value has been used as "phenylpropane unit". The M_{w} values have been divided by 180 Da, thus obtaining the phenylpropane unit numbers on weight average.

In further embodiments, the lignin fraction has a polydispersity index (PDI) of 1.25 to 12.

The polydispersity index (PDI) or heterogeneity index, or simply dispersity, is a measure of the distribution of molecular mass in a given polymer sample. PDI is the weight average molecular weight (M_{w}) divided by the number average molecular weight (Mₙ). It indicates the distribution of individual molecular masses in a batch of polymers.

Preferably, said lignin fraction further comprises up to 30wt% of cellulose, more preferably 10-30 wt% of cellulose, based on the weight of the lignin fraction. The fungus of *Trichoderma* genus produces cellulose-degrading enzymes such as exoglucanase (EXG), endoglucanase (EG) and β-glucosidase (BGL). Cellulases are the most efficient enzyme system for the complete hydrolysis of cellulosic substrates into its monomeric glucose, which is a fermentable sugar. As sugar helps plant cellular respiration and cell growth, it follows that the presence of cellulose in the composition of the invention is advantageous for further improving the overall efficiency in promoting the plant growth.

In preferred embodiments, the composition of the invention comprises a fungus of *Trichoderma* genus and a lignin fraction, wherein:
- said fungus is selected from *Trichoderma harzianum, Trichoderma atroviride Trichoderma virens,* and mixtures thereof,
- said lignin fraction comprises fragments having a weight average molecular weight of 3,000-20,000 Daltons, as measured by Size-Exclusion Chromatography, said fragments comprising 16-111 phenylpropane units on weight average,
and wherein the fungus is in a concentration of 1×10⁶ to 8×10⁶ spores/ml of composition, and the lignin fraction in a concentration of 0.1wt% to 4wt%, based on the weight of the composition.

More preferably, the composition of the invention comprises a fungus of *Trichoderma* genus and a lignin fraction, wherein:
- said fungus is selected from *Trichoderma harzianum, Trichoderma atroviride Trichoderma virens,* and mixtures thereof,
- said lignin fraction comprises fragments having a weight average molecular weight of 3,000-20,000 Daltons, as measured by Size-Exclusion Chromatography, said fragments comprising 16-111 phenylpropane units on weight average,
and wherein the fungus is in a concentration of 2×10⁶ to 6×10⁶ spores/ml of composition, and the lignin fraction in a concentration of 0.5wt% to 3wt%, based on the weight of the composition.

In some preferred embodiments, the composition of the invention comprises a fungus of *Trichoderma* genus and a lignin fraction, wherein:
- said fungus is selected from *Trichoderma harzianum* HK2, *Trichoderma atroviride* HK4, *Trichoderma virens* GV41, and mixtures thereof,
- said lignin fraction comprises fragments having a weight average molecular weight of 4,000-6,000 Daltons, as measured by Size-Exclusion Chromatography, said fragments comprising 22-33 phenylpropane units on weight average,
and wherein the fungus is in a concentration of 3×10⁶ to 5×10⁶ spores/ml of composition, and the lignin fraction in a concentration of 1wt% to 2wt%, based on the weight of the composition.

In other preferred embodiments, the composition of the invention comprises a fungus of *Trichoderma* genus and a lignin fraction, wherein:
- said fungus is selected from *Trichoderma harzianum* HK2, *Trichoderma atroviride* HK4, *Trichoderma virens* GV41, and mixtures thereof,
- said lignin fraction comprises fragments having a weight average molecular weight of 9,000-11,000 Daltons, as measured by Size-Exclusion Chromatography, said fragments comprising 50-61 phenylpropane units on weight average,
and wherein the fungus is in a concentration of 3×10⁶ to 5×10⁶ spores/ml of composition, and the lignin fraction in a concentration of 1wt% to 2wt%, based on the weight of the composition.

The most preferred embodiments are those where the composition of the invention comprises a fungus of *Trichoderma* genus and a lignin fraction, wherein:
- said fungus is *Trichoderma virens* GV41,
- said lignin fraction comprises fragments having a weight average molecular weight of 9,000-11,000 Daltons, as measured by Size-Exclusion Chromatography, said fragments comprising 50-61 phenylpropane units on weight average,
and wherein the fungus is in a concentration of 3×10⁶ to 5×10⁶ spores/ml of composition, and the lignin fraction in a concentration of 1wt% to 2wt%, based on the weight of the composition.

In other embodiments, the composition consists essentially of a fungus of *Trichoderma* genus and a lignin fraction, wherein:
- said fungus is selected from *Trichoderma aggressivum, Trichoderma asperellum, Trichoderma atroviride, Trichoderma citrinoviride, Trichoderma cremeum, Trichoderma harzianum, Trichoderma koningii, Trichoderma longibrachiatum, Trichoderma reesei, Trichoderma virens, Trichoderma viride, Trichoderma viridescens,* their protoplast fusants, and mixtures thereof,
- said lignin fraction comprises fragments having a weight average molecular weight up to 10,000 Daltons, as measured by Size-Exclusion Chromatography, said fragments comprising up to 55 phenylpropane units on weight average,
and wherein the fungus is in a concentration up to 1×10⁷ spores/ml of composition, and the lignin fraction in a concentration up to 5wt%, based on the weight of the composition. For the purposes of the present invention, the expression "consists essentially of" means that said fungus and said lignin fraction are the only active ingredients acting as plant growth and fruit production promoters which are present in the compositions, the possible other components having different activities or being simple co-formulants.

In further embodiments, the composition consists of a fungus of *Trichoderma* genus and a lignin fraction, as above described.

In another aspect, the present invention relates to a use of said composition as a plant growth and fruit production promoter in agriculture.

Preferably, the composition can be applied in an amount of 100-300 ml per plant, every 5-15 days.

In an additional aspect, the present invention concerns an agro-chemical product comprising the composition and agro-chemical additives.

Suitable additives are pH adjusters, acidity adjusters, water hardness adjusters, mineral oils, vegetal oils, fertilizers, leaf manures, and combinations thereof.

Exemplary additives include 2-ethyl hexanol EO-PO, alkoxylated alcohols, alkoxylated fatty amine, alkoxylated triglycerides, alkyl polyglycoside, alkylethersulfate sodium salt, alkylphenolethylene oxide condensate, alkylphenylhydroxypolyoxyethylene, allyl polyethylene glycol methyl ether, amphoteric dipropionate surfactant, di-l-p-menthene, dimethyl polysiloxane, esterified vegetable oil, ethylene oxide condensate, fatty acid esters, fatty alcohol ethylene oxide condensate, fatty alcohol polyalkoxylate, lecithin (soya), methylated rapeseed oil, n-dodecylpyrrolidone, n-methylpyrrolidone, n-octylpyrrolidone, non-ionic surfactant, nonyl phenol ethylene oxide condensate, paraffin oils, poly(vinylpyrrolidione/1-hexadecene, polyacrylamide, polyalkylene glycol, polyalkyleneoxide, polyether modified trisiloxane, polyethylene polypropylene glycol, polyoxyethylene monolaurate, propionic acid, styrene-butadiene co-polymer, synthetic latex, tallow amine ethoxylate, vegetable oil, and mixtures thereof.

In view of the fact that the composition is effective even at very reduced concentrations of fungus and lignin fraction, the agro-chemical product advantageously and preferably comprises said composition in concentration of 1-500 grams per kg of agro-chemical product.

The agro-chemical product can be in a solid or liquid form.

When the agro-chemical product is in a solid form, said solid form can be tablet, mini-tablet, micro-tablet, granule, micro-granule, pellet, multiparticulate, micronized particulate, or powder.

When the agro-chemical product is in a liquid form, said liquid form can be solution, suspension, emulsion, dispersion, drops or sprayable fluid, and can be either a water- or oily-based liquid form. Said liquid form can comprise a solvent. Suitable solvents are water, glycols, alcohols, polyalcohols, organic acids, and combinations thereof. Preferred solvents are water, methanol, ethanol, n-propanol, iso-propanol, n-butanol, isobutanol, allyl alcohol, 1,2-propylene glycol, 1,3-propylene glycol, 1,2-ethylene glycol, polyethylene glycol (PEG), glycerol, lactic acid, polylactic acid, and mixtures thereof. More preferred solvents are water, 1,2-propylene glycol, 1,3-propylene glycol, 1,2-ethylene glycol, polyethylene glycol (PEG), and mixtures thereof.

Preferably, when the agro-chemical product is in a liquid form, said liquid form has a pH of 5-9, more preferably 6-8.

When the agro-chemical product is in a liquid form, said liquid form comprises 1-50 wt% of the composition. This means that the agro-chemical product is a concentrate that can be suitably diluted or directly mixed with other chemicals before use, if desired. Said agro-chemical product can be bait in grains, aerosol cans, liquid (without dilution), bait in bulk, matrices, concentrated bait, fluid concentrate miscible in oils, encapsulated granules, suspension of capsules, dispersible concentrate, powder, powder for dry tanning of seeds, emulsifiable concentrate, electrically chargeable liquid, water-in-oil emulsion, emulsion for tanning of seeds, oil-in-water emulsion, smoky jar, fine granules, smoky candle, smoky cartridge, smoky slat, concentrated suspension for tanning, smoky tablet, smoking agent (fumigant), smoky granules (or pellets), gas (under pressure), granular bait, gasifiable product, microgranular, sliding powder, granular, oil-based paste, hot smoke discharging concentrate, solid / liquid combi packaging, liquid / liquid combi packaging, cold smoke discharging concentrate, solid / solid combi packaging, lacquer, solution for tanning of seeds, microemulsion, microgranular, dispersible oil, concentrated suspension miscible in oil, liquid miscible in oil, oily suspension, paste, flat bait, concentrated paste or gel, pour-on, stick for plants, treated or coated seeds, bait ready to use, spot-on, fragmented bait, concentrated suspension, suspension-emulsion, granular soluble in water, soluble concentrate, film-forming oil, powder soluble in water, soluble powder for tanning seeds, suspension, tablets, technical material, technical concentrate, powder for traces, ultralow volume liquid, hydrodispersible microgranular, hydrodispersible granular, wettable powder, wettable powder for tanning seeds, self-adhesive patch, and combinations thereof.

Advantageously, the agro-chemical product can further comprise a fertilizer comprising nitrogen, phosphorus, potassium compounds, or mixtures thereof.

In a further aspect, the present invention concerns a method for promoting plant growth and fruit production, said method comprising the step of applying the composition or the agro-chemical product to a plant or plant soil.

The agro-chemical product can be applied by one or more of the following procedures:
- mixing the agro-chemical product with seeds in a hopper of sowing machine,
- sprinkling the agro-chemical product next to the sowing furrows,
- sprinkling the agro-chemical product throughout the field before or after the last soil tillage.

When the agro-chemical product is in a liquid form, it can be applied also by one or more of the following procedures:
- spraying the agro-chemical product on tubers, bulbs and seeds,
- spraying the agro-chemical product on aerial part of the plant, leaves, stems,
- dipping plant roots in a water solution comprising the agro-chemical product.

The agro-chemical product can be applied in an amount so as to achieve 1,000 g - 10,000 kg of composition per hectare (ha), preferably 1,000 g - 1,000 kg per ha, more preferably 1,000 g - 10,000 g per ha.

It should be also understood that all the combinations of preferred aspects of the composition of the invention, as well as of the preparation processes, and uses of the same, as above reported, are to be deemed as hereby disclosed.

All combinations of the preferred aspects of the composition of the invention, preparation processes, and uses disclosed above are to be understood as herein described.

Below are working examples of the present invention provided for illustrative purposes.

### EXAMPLES

M_{w} and Mₙ in these Examples have been measured by Size-Exclusion Chromatography according to the following procedure.

"wt%" means weight percentage based on the weight of the organic-inorganic hybrid material, unless otherwise specified.

### Reagents and materials

- Eluent: 0.1 M NaOH, flow 0.5 ml/min
- Calibration for RI detector: Pullulan standards, Mₚ: 100,000 - 1,080 (six standards), where Mₚ is peak maximum molecular weight

- Calibration for UV-detector (280 nm): PSS standards, polystyrenesulfonate sodium salt, Mₚ 65,400 - 891 (six standards). Standards are dissolved into ultra-pure water, concentration should be approximately 5 mg/ml. Injection volume is 20 µl.
- Quality control samples: lignin with known M_{w} distribution is used.

### Equipment and instruments

- Dionex Ultimate 3000 Autosampler, column compartment, and pump
- Dionex Ultimate 3000 Diode Array Detector
- Reflective Index detector: Shodex RI-101
- Columns: PSS MCX columns: precolumn and two analytical columns: 1000 Å and 100 000 Å, column material is sulfonated divinylbenzen copolymer matrix.
- Syringe filters 0,45 µm and glass sample bottles for STD samples. Sample filtration: Mini-Uniprep syringeless filter device PTFE or Nylon, 0,45 µm. For prefiltration 5 µm syringe filter if needed.
- Measuring bottles

### Procedure

### - Preparation of the eluent

Ideally, water used to prepare eluents should be high quality deionized water of low resistivity (18 MΩ•cm or better) that contains as little dissolved carbon dioxide as possible. The water must be free of biological contamination (e.g., bacteria and molds) and particulate matter.
- Needle washing with 10 % MeOH-water
- Liquid samples

Strong alkaline liquor samples are diluted 1:100 and filtered with PTFE syringe filters (0,45 µm) to vials. Solid lignin samples are diluted and dissolved into 0.1 M NaOH and filtered with PTFE, 0,45 µm syringe filters. Ready samples are load into autosampler. Injection volume is 20 µl. After samples 1 M NaOH is injected as a sample to clean the column.

Instrument parameters:
- Flow rate 0.5 ml/min
- Eluent 0.1 M NaOH
- Column oven temperature 30°C
- Isocratic run
- Run time 48 minutes

### - Solid samples

Solid samples (lignin) are dried overnight in an oven at 60°C, if needed. Approximately 10 mg is weighed into a 10-ml measuring bottle. Sample is dissolved and diluted into 0.1 M NaOH solution and filled into a mark. Sample is filtered with PTFE, 0,45 µm filters. If sample does not dissolve properly, it can be put in a ultrasound water bath or sample can be filtered through a 5 µm syringe filter.

### - Standard samples for calibration

Approximately 50 mg of each standard is weighed into a 10-ml measuring bottle and ultrapure water is added and filled into a mark. Standards are filtered with PTFE 0,45 µm syringe filters. After running the calibration samples, calibration results are integrated and processed in the processing method and saved. Calibration is linear 1st order calibration.

### - Quality control samples

For lignin samples, lignin with known M_{w} distribution is used as a quality control sample. Lignin is dissolved into 0.1 M NaOH and the concentration is approximately 1 mg/ml.

### EXAMPLE 1.

Organosolv lignin obtained from Beech wood (*Fagus sylvatica*) was subjected to an enzymatic pre-treatment to remove hemicelluloses and thereafter cellulose has been hydrolysed. Lignin fraction thus separated from pure biomass has the following characteristics:
> 95% of total solids
Single Species: Beech wood
M_{w} 9,000-11,000 Da (50-61 phenylpropane units)
essentially sulphur-free (sulphur content less than 3%)
comprises 23-29 wt% of cellulose.

This solid lignin fraction is shortly referred to as "**EOS**".

### EXAMPLE 2.

The following lignin fraction has been extracted from Kraft black liquor, said lignin fraction having the following characteristics:
> 95% of total solids

### Single Species: Southern Pine

| | |
|---|---|
| M_{w} | 4400-5000 Da (24-28 phenylpropane units) |
| Mₙ | 1200-1300 Da (6-7 phenylpropane units) |

### Structures of OH-groups:

| | |
|---|---|
| aliphatic | 2.1 mmol/g |
| carboxylic | 0.5 mmol/g |
| condensated and syringyl | 1.7 mmol/g |
| guaiacyl | 2.0 mmol/g |
| catecholic and p-OH-phenyl | 4.0 mmol/g |

This solid lignin fraction is shortly referred to as "**OXO**".

### EXAMPLE 3.

### Materials and methods

Seedlings germinated, ten days after sowing in polystyrene boxes, were transplanted in soil under plastic tunnels and were watered with 50 ml of a composition of the Table 1 below (i.e. Treatment). A subsequent application with 50 ml of the same composition was made after ten days. Subsequent applications were performed every ten days for two months on each plant with 150-200 ml of aqueous composition (Table 1).

Where the treatment involves a fungal consortium, the strains were mixed in a ratio of 1:1 or 1:1 :1 to a final concentration of 4 × 10⁶ spores ml⁻¹.

Reference (i.e. negative control) was obtained by watering the soil with water only. Each set of treatments of Table 1 consisted of 21 plants (7 plants for three biological replicates in randomly selected soil areas).

**Table 1.**

| **Treatment** | **Abbreviation** | **Concentration** |
|---|---|---|
| *T. Harzianum* HK2 | HK2 | 4× 10⁶ spores ml⁻¹ |
| *T. Atroviride* HK4 | HK4 | 4× 10⁶ spores ml⁻¹ |
| *T. virens* GV41 | GV41 | 4× 10⁶ spores ml⁻¹ |
| Lignin fraction Ex. 1 | EOS 2% | 2 wt% |
| Lignin fraction Ex. 1 | EOS 1% | 1 wt% |
| Lignin fraction Ex. 2 | OXO 2% | 2 wt% |
| Lignin fraction Ex. 2 | OXO 1% | 1 wt% |
| | | |
| control | H₂O | |
| | HK2+ OXO 1% | 4× 10⁶ spores ml⁻¹+OXO 1 % |
| | GV41+ OXO 2% | 4× 10⁶ spores ml⁻¹+OXO 2 % |
| | GV41+ OXO 1% | 4× 10⁶ spores ml⁻¹+OXO 1 % |
| | HK4+ EOS 1% | 4× 10⁶ spores ml⁻¹+EOS 1 % |
| | HK2+ HK4+ OXO 1% | 4× 10⁶ spores ml⁻¹+OXO 2 % |
| | HK2+ GV41+ OXO 1% | 4× 10⁶ spores ml⁻¹+OXO 2% |
| | HK2+ HK4+ EOS 2% | 4× 10⁶ spores ml⁻¹+EOS 2 % |
| | HK4+ GV41+ EOS 2% | 4× 10⁶ spores ml⁻¹+EOS 2% |
| | HK2+ HK4+ GV41 +EOS 1% | 4× 10⁶ spores ml⁻¹+EOS 1% |
| | HK2+ HK4 | 4× 10⁶ spores ml⁻¹ |
| | HK2+ GV41 | 4× 10⁶ spores ml⁻¹ |
| | HK4+ GV41 | 4× 10⁶ spores ml⁻¹ |
| | HK2+ HK4+ GV41 | 4× 10⁶ spores ml⁻¹ |

Ripe fruits were harvested 3 times in 2 months (August and September) starting at 3 months from the transplant.

The productivity of tomato was assessed by measuring yield in terms of grams of tomato fruits for plant (considering the first two fruiting branches, starting from the bottom), and the number of fruits for plant of each treatment.

### Results

In the present examples, the compositions were applied to tomato seedlings to evaluate their effect on plant growth and yield.

The results obtained from the field experiments and showed in Figures 1-4, demonstrated that the compositions were more performing in terms of promoting growth and yield resulting in a production increase in terms of number and kg of tomato fruit per plant compared to the single constituents of the compositions.

## Claims

1. A composition comprising a fungus of *Trichoderma* genus and a lignin fraction, wherein:
- said fungus is selected from *Trichoderma* species, their protoplast fusants, and mixtures thereof,
- said lignin fraction comprises fragments having a weight average molecular weight up to 20,000 Daltons, as measured by Size-Exclusion Chromatography, said fragments comprising up to 111 phenylpropane units on weight average,
and wherein the fungus is in a concentration up to 1×10⁷ spores/ml of composition, and the lignin fraction in a concentration up to 5wt%, based on the weight of the composition.

2. The composition of claim 1, wherein said *Trichoderma* species is selected from *Trichoderma aggressivum, Trichoderma asperellum, Trichoderma atroviride, Trichoderma citrinoviride, Trichoderma cremeum, Trichoderma harzianum, Trichoderma koningii, Trichoderma longibrachiatum, Trichoderma reesei, Trichoderma virens, Trichoderma viride,* and *Trichoderma viridescens.*

3. The composition of claim 1 or 2, wherein said fungus is selected from *T. Harzianum, T. Atroviride* and *T. virens,* and mixtures thereof.

4. The composition of claim 3, wherein said fungus is selected from *T. Harzianum* HK2, *T. Atroviride* HK4 and *T. virens* GV41, and mixtures thereof.

5. The composition of any one of claims 1-4, wherein said fungus is in a concentration of 1×10⁶ to 8×10⁶ spores/ml of composition, preferably 2×10⁶ to 6×10⁶ spores/ml of composition, more preferably 3×10⁶ to 5×10⁶ spores/ml of composition.

6. The composition of any one of claims 1-5, wherein said lignin fraction comprises fragments having a weight average molecular weight of 2,000-20,000 Daltons, preferably 3,000-20,000 Daltons, more preferably 4,000-15,000 Daltons.

7. The composition of claim 6, wherein said lignin fraction comprises fragments having a weight average molecular weight of 4,000-6,000 Daltons or 9,000-11,000 Daltons.

8. The composition of any one of claims 1-7, further comprising up to 30wt% of cellulose, more preferably 20-30 wt% of cellulose, based on the weight of the lignin fraction.

9. The composition of claim 1, wherein:
- said fungus is selected from *Trichoderma harzianum, Trichoderma atroviride Trichoderma virens,* and mixtures thereof,
- said lignin fraction comprises fragments having a weight average molecular weight of 3,000-20,000 Daltons, as measured by Size-Exclusion Chromatography, said fragments comprising 16-111 phenylpropane units on weight average,
and wherein the fungus is in a concentration of 1×10⁶ to 8×10⁶ spores/ml of composition, and the lignin fraction in a concentration of 0.1wt% to 4wt%, based on the weight of the composition.

10. The composition of claim 9, wherein:
- said fungus is selected from *Trichoderma harzianum, Trichoderma atroviride Trichoderma virens,* and mixtures thereof,
- said lignin fraction comprises fragments having a weight average molecular weight of 3,000-20,000 Daltons, as measured by Size-Exclusion Chromatography, said fragments comprising 16-111 phenylpropane units on weight average,
and wherein the fungus is in a concentration of 2×10⁶ to 6×10⁶ spores/ml of composition, and the lignin fraction in a concentration of 0.5wt% to 3wt%, based on the weight of the composition.

11. The composition of claim 10, wherein:
- said fungus is selected from *Trichoderma harzianum* HK2, *Trichoderma atroviride* HK4, *Trichoderma virens* GV41, and mixtures thereof,
- said lignin fraction comprises fragments having a weight average molecular weight of 4,000-6,000 Daltons, as measured by Size-Exclusion Chromatography, said fragments comprising 22-33 phenylpropane units on weight average,
and wherein the fungus is in a concentration of 3×10⁶ to 5×10⁶ spores/ml of composition, and the lignin fraction in a concentration of 1wt% to 2wt%, based on the weight of the composition.

12. The composition of claim 10, wherein:
- said fungus is selected from *Trichoderma harzianum* HK2, *Trichoderma atroviride* HK4, *Trichoderma virens* GV41, and mixtures thereof,
- said lignin fraction comprises fragments having a weight average molecular weight of 9,000-11,000 Daltons, as measured by Size-Exclusion Chromatography, said fragments comprising 50-61 phenylpropane units on weight average,
and wherein the fungus is in a concentration of 3×10⁶ to 5×10⁶ spores/ml of composition, and the lignin fraction in a concentration of 1wt% to 2wt%, based on the weight of the composition.

13. The composition of claim 12, wherein:
- said fungus is *Trichoderma virens* GV41,
- said lignin fraction comprises fragments having a weight average molecular weight of 9,000-11,000 Daltons, as measured by Size-Exclusion Chromatography, said fragments comprising 50-61 phenylpropane units on weight average,
and wherein the fungus is in a concentration of 3×10⁶ to 5×10⁶ spores/ml of composition, and the lignin fraction in a concentration of 1wt% to 2wt%, based on the weight of the composition.

14. Use of the composition of any one of claims 1-13 as a plant growth and fruit production promoter in agriculture.

15. An agro-chemical product comprising the composition of any one of claims 1-13 and agro-chemical additives.
